Europäisches Patentamt

European Patent Office

Office européen des brevets

(11) Publication number: 0 272 032
A2

# EUROPEAN PATENT APPLICATION

(21) Application number: 87310764.3

(22) Date of filing: 08.12.87

(51) Int. Cl.4: B60T 11/20 , B60T 11/10

(30) Priority: 13.12.86 GB 8629821

(43) Date of publication of application:
22.06.88 Bulletin 88/25

(84) Designated Contracting States:
DE ES FR GB IT

(71) Applicant: LUCAS INDUSTRIES public limited
company
Great King Street
Birmingham, B19 2XF West Midlands(GB)

(72) Inventor: Campbell, Roy The Corner House
1, Marlbrook Lane Lickey Rock
Bromsgrove Worcestershire(GB)

(74) Representative: Waite, Anthony William et al
MARKS & CLERK Alpha Tower Suffolk Street
Queensway
Birmingham B1 1TT(GB)

(54) Master cylinder assembly.

(57) A master cylinder assembly has a plurality of separate pressure cylinders (1) between which extends a transfer passage (17) controlled by valve means (19) to permit communication between respective pressure chambers of the cylinders when the cylinders are actuated simultaneously for normal retardation and to prevent such communication when one of the cylinders is operated individually for steering purposes. Pistons (3) are movable in the cylinders to pressurise fluid, in use, for brake actuation and hold the valve means (19) open during part of their travel. A reduced diameter rear part of each piston, when opposite the valve means, permits closure of the latter in the event of pressure failure in one of the cylinders, to enable braking pressure to be maintained in the other cylinder.

## MASTER CYLINDER ASSEMBLY.

This invention relates to a master cylinder assembly, primarily for a vehicle hydraulic braking system, and having a plurality of separate pressure cylinders between which extends a transfer passage controlled by valve means to permit communication between respective pressure chambers of the cylinders when the cylinders are actuated simultaneously and to prevent such communication when one of the cylinders is operated individually. Such an assembly is of particular use in an agricultural tractor, for example, in which straight-line braking is accomplished by the simultaneous actuation of a pair of cylinders and steering assistance can be provided by actuating one or other of the cylinders.

One form of master cylinder assembly of the foregoing kind is described in our British Patent No.2098686 in which a pressure piston of each cylinder is guided within the cylinder by a full diameter piston portion lying rearwardly of a reduced diameter piston portion, such that the reduced diameter portion permits compensating fluid flow through the transfer passage during a substantial portion of the piston travel before the full diameter portion substantially restricts further compensating flow. With such an arrangement, the valve means is maintained by the piston in its open condition over substantially the whole of the piston travel and a pressure failure occurring in one of the cylinders during braking would be transmitted through the transfer passage to the other cylinder, resulting in complete system pressure failure and a consequent safety risk.

An object of the present invention is to provide a master cylinder assembly of the kind referred to above in which the aforesaid problem is minimised or avoided.

According to the invention a master cylinder assembly comprises a plurality of separate pressure cylinders between which extends a transfer passage, fluid flow through which is controlled by transfer valves arranged to co-operate with respective transfer ports of the cylinders so as to permit communication between respective pressure chambers of the cylinders when the cylinders are actuated simultaneously and to prevent such communication when one of the cylinders is operated individually, a piston movable in each cylinder to pressurise fluid, in use, for brake actuation, and means operable, in response to piston travel, to permit the transfer valve of one of the cylinders to close the transfer passage, in the event of pressure failure in the other pressure cylinder, to enable braking pressure to be maintained in said one cylinder.

In one convenient arrangement, each piston co-operates with its associated transfer valve to maintain the valve in its open condition during part of the piston working travel, a rearward portion of each piston being recessed so that, after the completion of a predetermined part of the piston working travel, the transfer valve comes into coincidence with said recessed portion and is thereby permitted to close, in the event of pressure loss in the cylinder, by the application to the valve via the transfer passage of high pressure from the other pressure cylinder.

The invention will now be described, by way of example, with reference to the single accompanying drawing which illustrates one of a pair of identical master cylinders constituting a dual master cylinder assembly.

The dual master cylinder assembly of the invention comprises a pair of identical master cylinders interconnected in the manner to be described so as to function in an interdependent manner. Since the master cylinders are identical, only one will now be described.

The master cylinder illustrated comprises a body 1 containing a bore 2, along which slides a piston 3 which is actuated, in use, by a force input rod 4 engaging the outer end of the piston by way of an enlarged head 5 which co-operates with a stop ring 6, itself retained by a circlip 7 lodged in a groove of the body, in order to limit the outward movement of the rod. The body has a recuperation port 8 at the forward end of the bore 2 in the direction of working travel of the piston 3, the port being connectable to a fluid reservoir by means of a port connection 9. The port 8 is controlled, in conventional manner, by a centre valve assembly 10 which is connected to the piston 3 by means of a stem 11 which can be accommodated in a longitudinal bore 12 of the piston during forward movement of the latter. A piston return spring 13 acts, at one of its ends, against part of the valve assembly 10 and at its other end against a cap 14 mounted on a forward reduced diameter end portion 15 of the piston and acting also as a retention means for the rod 11. Operation of the valve assembly 10 during working movement of the piston is entirely conventional and requires no further description here.

The pressure chamber 2 is placed in communication, in use, via an outlet port connection 16, with a vehicle braking system (not shown). Typically, in the most common mode of use of the cylinder on an agricultural tractor for example, the pressure chamber 2 would be connected to a rear wheel brake at one side of the tractor and a corresponding pressure chamber of the other cylinder would be connected to a rear wheel brake on the other side of the tractor. Such an arrangement enables straight line braking to be achieved by braking both wheels simultaneously for retarding the tractor and the rear wheels to be braked independently for steering purposes by operating only one of the master cylinders.

Because the respective brakes are likely to wear at different rates, it is important for the pressure chambers of the two master cylinders of the master cylinder assembly to be interconnected, at least over an initial part of the working travel of the piston, in order to permit compensating fluid flow between the cylinders and thereby avoid pressure differences which would otherwise occur in the two cylinders.

For this purpose, a transfer passage 17 is connected between respective compensation ports 18 of the two cylinders by way of respective port connections 16', each of which incorporates a transfer valve assembly 19. Each such valve assembly includes a valve member 20 of which the operation is controlled, responsive to movement of the piston 3, by way of a thrust member, illustrated as a ball 21. The ball 21 normally rests, in the retracted position of the piston as shown, on a reduced diameter portion 22 of the piston, this being joined by an inclined portion 23 to an elongate piston portion 24 having a larger diameter than the portion 22 but spaced slightly from the cylinder internal wall. A land 25 of relatively small axial extent engages the cylinder internal wall and provides guidance and support for the piston within the cylinder. Rearwardly of the land 25, the piston is formed with a reduced diameter portion 26 of smaller diameter than the portion 24, for the purpose to be described.

As will be well understood by a person skilled in the art, simultaneous initiation of forward movement of the pistons 3 brings the inclined surface 23 of each piston into engagement with the adjacent ball 21, causing the latter to be lifted into engagement with the valve member 20. Continued forward movement of the piston enables the piston portion 24 to maintain the valve in its open condition, permitting pressure compensation to take place between the interconnected pressure chambers 2 of the respective cylinders in conventional manner.

In some conventional arrangements, the valve assembly 19 remains open during substantially the whole of the piston working travel. With such an arrangement, a pressure loss occurring in one of the master cylinders will be transmitted through the open valve assemblies and transfer passage to the other master cylinder, resulting in a total system pressure failure. By contrast, if in the master cylinder assembly of the invention, the pistons have not already moved sufficiently during normal actuation to bring the lands 25 beyond the transfer ports, a pressure failure in one of the cylinders will result in the piston of that cylinder moving sufficiently inwardly for this to happen, so that the reduced diameter piston portion 26 now lies beneath the transfer port. This enables the ball 21 to fall back onto the outer surface of the reduced diameter piston portion 26 so that the ball can no longer co-operate with the associated valve member 20. Once this situation is reached, the relatively high pressure in the still operative other master cylinder will be transmitted through the transfer passage to the valve member 19 of the failed cylinder and cause that valve member to close so as to isolate the pressurised cylinder which is therefore able to maintain actuating pressure to one of the brakes. In practice, the outer end of the land 25 is located at about half of the normal piston stroke length along the piston, which means that the valve assembly 19 will not be held open during the latter half of the piston stroke, irrespective of whether or not a pressure loss occurs in the cylinder.

It will be seen that the invention provides a particularly simple and convenient means of ensuring fail safe operation of one of the cylinders of the master cylinder assembly, in the event of pressure loss for any reason in the other cylinder.

It will be understood that the land 25 may be made of any convenient length and disposed at any convenient location consistent with providing the necessary guidance and support for the piston whilst at the same time enabling a reduced diameter piston portion to be provided rearwardly of the land. Although it is convenient to reduce the diameter of the rearward portion of the piston over its entire circumference, as in the embodiment illustrated, it would alternatively be possible to provide a circumferentially restricted type of recess, such as a groove formed at a location which enables it to come into opposed relation with the transfer port after the passage of the land 25 past that port. In a further modification, the supporting piston land could be at or near the rearmost end of the piston and then lie rearwardly of the recessed part 26 instead of forwardly thereof as illustrated.

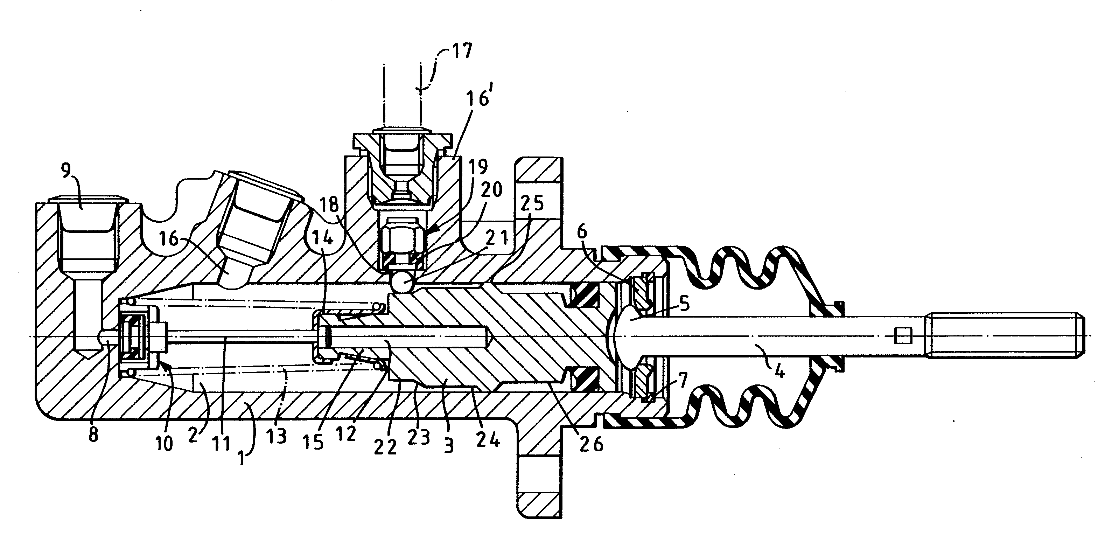

## Claims

1. A master cylinder assembly comprising a plurality of separate pressure cylinders (1) between which extends a transfer passage (17), fluid flow through which is controlled by transfer valves (19) arranged to co-operate with respective transfer ports (18) of the cylinders so as to permit communication between respective pressure chambers (2) of the cylinders when the cylinders are actuated simultaneously and to prevent such communication when one of the cylinders is operated individually, and a piston (3) movable in each cylinder to pressurise fluid, in use, for brake actuation, characterised by means (26) operable, in response to piston travel, to permit the transfer valve (19) of one of the cylinders to close the transfer passage (17), in the event of pressure failure in the other pressure cylinder (2), to enable braking pressure to be maintained in said one cylinder (2).

2. A master cylinder according to Claim 1 characterised in that each piston (3) co-operates with its associated transfer valve (19) to maintain the valve in its open condition during part of the piston working travel, a rearward portion (26) of each piston being recessed so that, after the completion of a predetermined part of the piston working travel, the transfer valve (19) comes into coincidence with said recessed portion, and is thereby permitted to close, in the event of pressure loss in the cylinder, by the application to the valve via the transfer passage (17) of high pressure from the other cylinder.

3. A master cylinder according to Claim 2 characterised in that each piston (3) is guided in the bore of its respective cylinder by a land (25) of the piston (3) engaging the cylinder internal wall, said recessed piston portion (26) being disposed rearwardly of the land (25).

4. A master cylinder according to any one of the preceding claims characterised in that each transfer valve (19) comprises a valve element (20) which co-operates with a valve seat for control of said fluid flow and actuation of which is effected by thrust means (21) engaging the piston outer surface (24).

5. A master cylinder according to Claim 4 characterised in that said thrust means is a separate component (21) disposed between the valve element (20) and said piston surface (24).

6. A master cylinder according to any one of Claims 2 to 5 characterised in that said recessed piston portion (26) is of cylindrical form.

7. A master cylinder according to any one of Claims 2 to 5 characterised in that said recessed portion (26) lies in a longitudinal groove in the external surface of the piston (3).